(19) Europäisches Patentamt
European Patent Office
Office européen des brevets

(11) **EP 2 826 199 B1**

(12) **EUROPÄISCHE PATENTSCHRIFT**

(45) Veröffentlichungstag und Bekanntmachung des Hinweises auf die Patenterteilung:
**10.04.2019 Patentblatt 2019/15**

(21) Anmeldenummer: **13706171.9**

(22) Anmeldetag: **13.02.2013**

(51) Int Cl.:
**H04L 9/30** *(2006.01)*    **H04L 9/32** *(2006.01)*

(86) Internationale Anmeldenummer:
**PCT/EP2013/000421**

(87) Internationale Veröffentlichungsnummer:
**WO 2013/135337 (19.09.2013 Gazette 2013/38)**

(54) **VERFAHREN UND SYSTEM ZUR GESICHERTEN KOMMUNIKATION ZWISCHEN EINEM RFID-TAG UND EINEM LESEGERÄT**

METHODS AND SYSTEM FOR SECURE COMMUNICATION BETWEEN AN RFID TAG AND A READER

PROCÉDÉS ET SYSTÈME DE COMMUNICATION SÉCURISÉE ENTRE UNE ÉTIQUETTE RFID ET UN LECTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.03.2012 DE 102012005427**

(43) Veröffentlichungstag der Anmeldung:
**21.01.2015 Patentblatt 2015/04**

(73) Patentinhaber: **Giesecke+Devrient Mobile Security GmbH
81677 München (DE)**

(72) Erfinder:
• **HINZ, Walter
  85748 Garching (DE)**
• **FINKENZELLER, Klaus
  85774 Unterföhring (DE)**
• **SEYSEN, Martin
  80809 München (DE)**

(56) Entgegenhaltungen:
**DE-A1- 19 820 605**

• **OREN Y ET AL: "A Low-Resource Public-Key Identification Scheme for RFID Tags and Sensor Nodes", PROCEEDINGS OF THE SECOND ACM CONFERENCE ON WIRELESS NETWORK SECURITY : ZURICH, SWITZERLAND, MARCH 16 - 18, 2009, NEW YORK, NY : ACM, Bd. 2009, 16. März 2009 (2009-03-16), Seiten 59-68, XP001553406, ISBN: 978-1-60558-460-7 in der Anmeldung erwähnt**
• **CHAE HOON LIM ED - HEUNG YOUL YOUM ET AL: "Practical Broadcast Authentication Using Short-Lived Signatures in WSNs", 25. August 2009 (2009-08-25), INFORMATION SECURITY APPLICATIONS, SPRINGER BERLIN HEIDELBERG, BERLIN, HEIDELBERG, PAGE(S) 366 - 383, XP019136005, ISBN: 978-3-642-10837-2 das ganze Dokument**
• **MONTGOMERY P L: "MODULAR MULTIPLICATION WITHOUT TRIAL DIVISION", MATHEMATICS OF COMPUTATION, AMERICAN MATHEMATICAL SOCIETY, US, Bd. 44, Nr. 170, 1. April 1985 (1985-04-01), Seiten 519-521, XP000747434,**
• **Walter Hinz ET AL: "Secure UHF Tags with Strong Cryptography", SENSORNETS 2013, 2nd international conference on sensor networks, 21. Februar 2013 (2013-02-21), Seiten 1-9, XP055061853, Gefunden im Internet: URL:http://www.rfid-handbook.de/downloads/ SensorNets2013-Paper_V20121120.pdf [gefunden am 2013-05-03]**

- **CHIEN-NING CHEN ET AL: "Standardized Signature Algorithms on Ultra-constrained 4-Bit MCU", 7. November 2012 (2012-11-07), ADVANCES IN INFORMATION AND COMPUTER SECURITY, SPRINGER BERLIN HEIDELBERG, BERLIN, HEIDELBERG, PAGE(S) 37 - 50, XP047021122, ISBN: 978-3-642-34116-8 das ganze Dokument**

**Beschreibung**

Die Erfindung betrifft Verfahren und ein System zur gesicherten Kommunikation zwischen einem RFID-Tag und einem Lesegerät über die Luftschnittstelle sowie entsprechende RFID-Tags und entsprechende Lesegeräte.

Die RFID-Technologie ("radio frequency identification") ermöglicht insbesondere die automatische Identifizierung von Personen und Objekten und findet zunehmend Verbreitung bei einer Vielzahl von Anwendungen, wie beispielsweise beim Supply Chain Management, bei Zugangskontrollsystemen, bei Systemen zur Diebstahlsicherung von Waren, beim elektronischen Ticketing und dergleichen. Ein RFID-System besteht in der Regel aus einem portablen Datenträger in Form eines RFID-Tags (auch Transponder genannt), das eine Person mit sich führt bzw. an einem Objekt angebracht ist und in dem ein das RFID-Tag und/oder das Objekt eindeutig identifizierender Identifizierungscode (dem Fachmann auch als Unique-ID (UID), Tag-ID (TID) oder "Unique Item Identifier" (UII) bekannt) gespeichert ist, sowie einem Lesegerät zum kontaktlosen Auslesen des Identifizierungscodes des RFID-Tags. Dabei ist das Lesegerät üblicherweise nur ein Lesegerät einer Vielzahl von Lesegeräten, die an unterschiedlichen Orten installiert sind und über ein Hintergrundsystem auf dort hinterlegte Daten einer Vielzahl von RFID-Tags zugreifen können.

Insbesondere für Logistikanwendungen und für das Supply Chain Management vorgesehene kostengünstige RFID-Tags, bei denen es sich in der Regel um passive RFID-Tags handelt, welche die für den Betrieb benötigte Energie aus dem elektromagnetischen Feld eines Lesegeräts beziehen, bieten häufig keine kryptographischen Funktionen, so dass eine Authentifizierung eines RFID-Tags gegenüber einem Lesegerät bei derartigen RFID-Tags nicht möglich ist. Dies ist beispielsweise bei UHF-RFID-Tags der Fall, die dem Fachmann unter dem Namen Class-1 Gen-2 EPC-Tags bekannt sind, d.h. RFID-Tags, die gemäß dem Standard EPC Class 1 Generation 2 bzw. dem neueren Standard ISO/IEC 18000-63 ausgebildet sind. Wie dies dem Fachmann bekannt ist, umfasst der Begriff "Class-1 Gen-2 EPC-Tags" auch Tags nach dem Standard ISO/IEC 18000-63. Bei derartigen RFID-Tags wird der eindeutige Identifizierungscode als EPC ("Electronic Product Code") bezeichnet, bei dem es sich üblicherweise um eine aus 96 Bits bestehende, in einem jeweiligen RFID-Tag hinterlegte Bitfolge handelt. Der EPC wird bei einem Auslesevorgang eines RFID-Tags im Klartext ohne Authentisierung an ein Lesegerät übertragen und kann somit sowohl aktiv durch ein Lesegerät eines unberechtigten Dritten als auch passiv abgegriffen werden, indem ein Dritter den ungesicherten Kommunikationskanal, d.h. die Luftschnittstelle, zwischen dem RFID-Tag und einem Lesegerät abhört.

Dies führt zu zwei potentiellen Problemen, nämlich zum einen dazu, dass die Anwesenheit und die Position eines RFID-Tags durch einen unberechtigten Dritten erfasst und verfolgt werden können, was auch als Tracking eines RFID-Tags bezeichnet wird, und zum anderen dazu, dass ein Dritter den ausgelesenen EPC in ein neues, gefälschtes RFID-Tag kopieren kann und sich somit das neue, gefälschte RFID-Tag als das Tag ausgeben kann, aus dem der EPC ursprünglich ausgelesen worden ist, was auch als Klonen eines RFID-Tags bezeichnet wird.

Zur Sicherung der Kommunikation zwischen einem RFID-Tag und einem Lesegerät bieten sich kryptographische Verfahren an, die zum einem eine einseitige oder gegenseitige Authentifizierung zwischen dem RFID-Tag und dem Lesegerät und zum anderen eine Verschlüsselung der Kommunikation über die Luftschnittstelle ermöglichen. Kryptographische Verfahren werden in symmetrische Verfahren, bei denen Sender und Empfänger denselben geheimen Schlüssel verwenden, und Public-Key- bzw. asymmetrische Verfahren unterteilt, bei denen der Sender einen öffentlichen Schlüssel ("public key") und der Empfänger einen geheimen Schlüssel ("private key") verwendet. Bei symmetrischen Verfahren besteht jedoch bekanntermaßen das Problem, dass sowohl in einem RFID-Tag als auch in einem Lesegerät bzw. einem damit verbundenen Hintergrundsystem der gemeinsame geheime Schlüssel sicher hinterlegt sein muss, was bei Systemen mit einer Vielzahl von RFID-Tags und einer Vielzahl von Lesegeräten eine aufwändige Schlüsselverwaltung erforderlich macht, die bei Public-Key- bzw. asymmetrischen Verfahren entfällt. Eine derartige Schlüsselverwaltung kann auch bei Systemen entfallen, die ein symmetrisches Verfahren verwenden, falls in allen RFID-Tags und im Hintergrundsystem derselbe Generalschlüssel hinterlegt wird. Dies birgt jedoch die Gefahr, dass sobald der Generalschlüssel eines RFID-Tags ermittelt worden ist, das ganze System gebrochen ist. Diese Gefahr besteht bei Public-Key-Verfahren nicht.

Ein bekanntes Public-Key-Verfahren ist das Rabin-Verfahren, das wie das häufig eingesetzte RSA-Verfahren als Grundlage die modulare Exponentiation nutzt. Da beim Rabin-Verfahren die Berechnung der Verschlüsselung wesentlich einfacher, d.h. weniger rechenintensiv als beim RSA-Verfahren ist, bietet sich das Rabin-Verfahren gegenüber dem RSA-Verfahren insbesondere dort an, wo die Instanz, welche die Verschlüsselung durchführt, d.h. der Sender einer verschlüsselten Nachricht, nur über eine begrenzte Prozessorleistung verfügt, wie dies beispielsweise bei einem ressourcenbeschränkten RFID-Tag der Fall ist, das sicher mit einem an ein Hintergrundsystem angebundenes Lesegerät kommunizieren soll.

Beim Rabin-Verfahren besteht der geheime Schlüssel aus zwei in der Praxis hinreichend groß gewählten Primzahlen $p$ und $q$, die über eine bestimmte Kongruenzbedingung miteinander verknüpft sind. Das Produkt $n = p \cdot q$ der beiden Primzahlen $p$ und $q$ definiert den Modulus oder das Modul n und stellt gleichzeitig den öffentlichen Schlüssel dar. Zweckmäßigerweise sind die Primzahlen $p$ und $q$ in etwa gleich groß. Gemäß dem Rabin-Verfahren wird ein zu übermittelnder Klartext M durch modulares Quadrieren und Anwenden der Modulo-Operation verschlüsselt, d.h. der Ciphertext $C$ ergibt sich aus dem Klartext $M$ gemäß der folgenden Formel: $C = M^2 \bmod n$.

Die Sicherheit des Rabin-Verfahrens beruht darauf, dass die Berechnung der modularen Quadratwurzel aus dem Ciphertext $C$ ohne Kenntnis der Primzahlen $p$ und $q$ sehr schwierig ist. Dies ist aber nur dann der Fall, wenn der Klartext $M$ nicht wesentlich kleiner als der Modulus $n$ ist. Durch die auf die Quadrierung folgende Modulo-Operation wird verhindert, dass eine Entschlüsselung durch einfaches Ziehen der Wurzel möglich ist.

Da beim Rabin-Verfahren die Verschlüsselung durch den Sender eine modulare Quadrierung beinhaltet, muss der Empfänger zur Entschlüsselung die modulare Quadratwurzel des Ciphertextes $C$ berechnen. Hierbei kann bekanntermaßen der Chinesische Restklassensatz (CRT; "chinese remainder theorem") ausgenutzt werden. Wie dies der Fachmann weiß, ergeben sich dabei vier Quadratwurzeln, aus denen eine als der ursprüngliche Klartext $M$ ausgewählt werden muss. Hierzu kann der "richtige" Klartext $M$ beispielsweise mittels einer geeigneten Kennung, Prüfsumme oder dergleichen dem Empfänger kenntlich gemacht werden.

Wie sich dies aus der vorstehend beschriebenen Formel für die Berechnung des Ciphertextes $C$ beim Rabin-Verfahren ergibt, muss der Sender zur Durchführung der Modulo-Operation in der Regel eine Langzahldivision durchführen. Eine derartige Langzahldivision kann jedoch insbesondere auf einfachen Mikroprozessoren, wie diese bei RFID-Tags zum Einsatz kommen, nur sehr aufwändig realisiert werden.

In der Publikation "A Low-Resource Public-Key Identification Scheme for RFID Tags and Sensor Nodes" von Y. Oren und M. Feldhofer in D.A. Basin, S. Capkun, and W.Lee, editors, WISEC, Seiten 59-68, ACM 2009 wird unter dem Namen WIPR-Verfahren eine Abwandlung des herkömmlichen Rabin-Verfahrens vorgeschlagen, die insbesondere für die Sicherung der Kommunikation zwischen einem resourcenbeschränkten RFID-Tag mit einem einfachen Prozessor und einem Lesegerät vorgesehen ist. Gegenüber dem vorstehend beschriebenen herkömmlichen Rabin-Verfahren weist das WIPR-Verfahren den Vorteil auf, dass zur Berechnung des Ciphertextes anstatt einer aufwändigen Langzahl-Division, die sehr rechenintensiv ist und somit auf einfachen Mikroprozessoren, wie sie auf RFID-Tags üblicherweise zu finden sind, kaum implementiert werden kann, Langzahl-Multiplikationen zum Einsatz kommen, die wesentlich schneller ausführbar sind als Divisionen und sich auch hardwaremäßig einfacher realisieren lassen.

Gemäß dem WIPR-Verfahren wird der Ciphertext $C'$ berechnet, indem der Sender, z.B. ein RFID-Tag, eine Zufallszahl $r$ erzeugt, diese mit dem Modulus n multipliziert und das Ergebnis zum Quadrat des Klartextes $M$ hinzu addiert, also $C' = M^2 + r \cdot n$. Dabei fließt ein Identifizierungscode des RFID-Tags in den Klartext $M$ ein und die Größe der Zufallszahl $r$ wird so gewählt, dass das Produkt $r \cdot n$ mehr als doppelt so groß wie der Modulus $n$ ist. Im Gegensatz zum herkömmlichen Rabin-Verfahren wird beim WIPR-Verfahren das Quadrat des Klartextes $M$ also nicht durch die Durchführung der Modulo-Operation, die eine Langzahldivision beinhaltet, sondern durch die Addition des Produkts $r \cdot n$ mit der geeignet gewählten Zufallszahl $r$ maskiert.

In der Publikation A. Shamir, "Memory Efficient Variants of Public-Key Schemes for Smart Card Applications", in A. D. Santis, editor, Advances in Cryptology - EUROCRYPT '94, Springer LNCS, Band 950, Seiten 445-449 ist gezeigt worden, dass ein Verfahren wie das WIPR-Verfahren ebenso sicher wie das herkömmliche Rabin-Verfahren ist, sofern die Zufallszahl $r$ aus einem hinreichend großen Zahlenbereich zufällig gewählt wird.

Jedoch wird beim WIPR-Verfahren der Vorteil der Vermeidung einer Langzahldivision dadurch erkauft, dass der Ciphertext C' aufgrund des Wegfallens der Modulo-Operation beim Quadrieren des Klartextes $M$ und aufgrund des Produkts des Modulus n mit der hinreichend groß gewählten Zufallszahl r in der Regel sehr lang sein wird, was den Authentisierungsvorgang zwischen einem RFID-Tag und einem Lesegerät verlangsamt, da eine größere Datenmenge vom RFID-Tag zum Lesegerät übertragen werden muss.

Die Patentoffenlegungsschrift DE 198 20 605 offenbart ein durch Montgomery-Multiplikation für rechenschwache Geräte vorteilhaft gestaltetes Rabin-Verfahren zur Verifizierung einer Unterschrift.

Vor diesem Hintergrund stellt sich der vorliegenden Erfindung das Problem, verbesserte Verfahren und ein verbessertes System zur gesicherten Kommunikation zwischen einem RFID-Tag und einem Lesegerät über die Luftschnittstelle bereitzustellen, die das RFID-Tag insbesondere davor schützen, getrackt und/oder geklont zu werden. Ferner sollen ein entsprechend ausgestaltetes RFID-Tag sowie ein entsprechend ausgestaltetes Lesegerät bereitgestellt werden.

Diese Aufgabe wird erfindungsgemäß durch den Gegenstand der unabhängigen Ansprüche gelöst. Vorteilhafte Weiterbildungen der Erfindung sind in den abhängigen Ansprüchen definiert.

Die Erfindung geht von dem Grundgedanken aus, dass zur gesicherten Kommunikation zwischen einem RFID-Tag und einem Lesegerät eine Abwandlung des Rabin-Verfahrens verwendet wird, bei der im Rahmen der Verschlüsselung eines Klartextes $M$, in den ein Identifizierungselement des RFID-Tags oder eines damit versehenen Objekts einfließt, vom RFID-Tag statt des Quadrats des Klartextes $M$ modulo n, d.h. $M^2 \bmod n$, das Montgomery-Residuum ("Montgomery reduction") des Quadrats des Klartextes $M$ modulo $n$ hinsichtlich einer Montgomery-Basis $R$, d.h. $C^* = M^2 R^{-1} \bmod n$, berechnet wird und der daraus resultierende Ciphertext $C^*$ zur Authentisierung des RFID-Tags verwendet wird. Dabei handelt es sich bei dem Modulus $n = p \cdot q$ um den öffentlichen Schlüssel des Lesegeräts, bei den Primzahlen $p, q$ um den privaten Schlüssel des Lesegeräts und bei der Montgomery-Basis $R$ um eine ganze Zahl, die größer als der Modulus $n$ ist. Hierbei ist die Montgomery-Basis R in der Regel eine Zweierpotenz.

Auf der Grundlage des vorstehend beschriebenen Grundgedankens der vorliegenden Erfindung wird gemäß einem ersten Aspekt der Erfindung ein Verfahren zur gesicherten Kommunikation zwischen einem RFID-Tag und einem Lesegerät bereitgestellt, wobei das Verfahren die folgenden Schritte umfasst, die im RFID-Tag durchgeführt werden. Das Verschlüsseln eines Klartextes $M$, in den ein Identifizierungselement des RFID-Tags oder eines damit versehenen Objekts einfließt, zur Berechnung eines Ciphertextes $C^*$, indem das Montgomery-Residuum des Quadrats des Klartextes $M$ modulo $n$ hinsichtlich einer Montgomery-Basis $R$, d.h. $C^* = M^2 R^{-1}$ mod$n$, berechnet wird und das Aussenden einer Authentisierungsnachricht an das Lesegerät, wobei die Authentisierungsnachricht auf dem Ciphertext $C^*$ basiert.

Ferner wird auf der Grundlage des vorstehend beschriebenen Grundgedankens der vorliegenden Erfindung gemäß einem zweiten Aspekt der Erfindung ein Verfahren zur gesicherten Kommunikation zwischen einem RFID-Tag und einem Lesegerät bereitgestellt, wobei das Verfahren die folgenden Schritte umfasst, die im Lesegerät durchgeführt werden. Das Empfangen einer Authentisierungsnachricht vom RFID-Tag, die auf einem verschlüsselten Klartext $M$ basiert, in den ein Identifizierungselement des RFID-Tags oder eines damit versehenen Objekts eingeflossen ist, und das Entschlüsseln des verschlüsselten Klartextes $M$, wobei der Schritt des Entschlüsselns die Multiplikation des verschlüsselten Klartextes $M$ mit einer Montgomery-Basis $R$ und die anschließende Durchführung der Modulo-Operation mit dem Modulus $n$ umfasst. Vorzugsweise umfasst der Schritt des Entschlüsselns ferner die anschließende Ziehung der Quadratwurzel modulo n analog dem herkömmlichen Rabin-Verfahren.

Des weiteren wird auf der Grundlage des vorstehend beschriebenen Grundgedankens der vorliegenden Erfindung gemäß einem dritten Aspekt der Erfindung ein RFID-Tag zur gesicherten Kommunikation mit einem Lesegerät bereitgestellt. Dabei umfasst das RFID-Tag eine Prozessoreinheit und eine Speichereinheit. In der Speichereinheit ist ein Identifizierungselement hinterlegt. Die Prozessoreinheit ist dazu ausgestaltet, einen Klartext $M$, in den das Identifizierungselement des RFID-Tags oder eines damit versehenen Objekts einfließt, zur Berechnung eines Ciphertextes $C^*$ zu verschlüsseln, indem das Montgomery-Residuum des Quadrats des Klartextes $M$ modulo $n$ hinsichtlich einer Montgomery-Basis $R$, d.h. $C^* = M^2 R^{-1}$ modn, berechnet wird, und eine Authentisierungsnachricht an das Lesegerät zu senden, wobei die Authentisierungsnachricht auf dem Ciphertext $C^*$ basiert.

Ferner wird auf der Grundlage des vorstehend beschriebenen Grundgedankens der vorliegenden Erfindung gemäß einem vierten Aspekt der Erfindung ein Lesegerät zur gesicherten Kommunikation mit einem RFID-Tag bereitgestellt. Das Lesegerät umfasst eine Prozessoreinheit, die dazu ausgestaltet ist, eine Authentisierungsnachricht vom RFID-Tag zu empfangen, die auf einem verschlüsselten Klartext $M$ basiert, in den ein Identifizierungselement des RFID-Tags oder eines damit versehenen Objekts eingeflossen ist, und den verschlüsselten Klartext zu entschlüsseln, wobei bei der Entschlüsselung der verschlüsselte Klartext $M$ mit einer Montgomery-Basis $R$ multipliziert und anschließend die Modulo-Operation mit dem Modulus $n$ durchgeführt wird. Vorzugsweise ist die Prozessoreinheit des Lesegeräts zur Entschlüsselung des verschlüsselten Klartextes ferner dazu ausgestaltet, anschließend analog dem herkömmlichen Rabin-Verfahren die Quadratwurzel modulo $n$ zu ziehen.

Schließlich wird auf der Grundlage des vorstehend beschriebenen Grundgedankens der vorliegenden Erfindung gemäß einem fünften Aspekt der Erfindung ein System zur gesicherten Kommunikation mit wenigstens einem RFID-Tag gemäß dem dritten Aspekt der Erfindung und wenigstens einem Lesegerät gemäß dem vierten Aspekt der Erfindung bereitgestellt.

Wie vorstehend erwähnt, handelt es sich dabei bei dem Modulus $n = p \cdot q$ um den öffentlichen Schlüssel des Lesegeräts, bei den Primzahlen $p, q$ um den privaten Schlüssel des Lesegeräts und bei der Montgomery-Basis $R$ um eine ganze Zahl, die größer als der Modulus $n$ ist.

Vorzugsweise enthält die vom RFID-Tag an das Lesegerät übertragene Authentisierungsnachricht den verschlüsselten Klartext M in Form des Ciphertextes $C^*$ mit $C^* = M^2 R^{-1}$ modn.

Gemäß bevorzugter Ausführungsformen der Erfindung fließen in den Klartext M ferner eine vom Lesegerät erzeugte erste Zufallszahl $RND1$ und eine vom RFID-Tag erzeugte zweite Zufallszahl $RND2$ ein. Dabei wird die erste Zufallszahl $RND1$ vorzugsweise als Challenge im Rahmen eines Challenge-Response-Verfahrens an das RFID-Tag übertragen. Bei dieser bevorzugten Ausgestaltung werden die in den Klartext $M$ einfließenden Daten, insbesondere das Identifizierungselement des RFID-Tags, die erste Zufallszahl $RND1$ und die zweite Zufallszahl $RND2$, vorzugsweise mittels einer Interleaving-Operation verwürfelt, um die vom Lesegerät und vom RFID-Tag stammenden zufälligen Daten zufällig über den Klartext $M$ zu verteilen. Durch die enthaltenen zufälligen Bestandteile $RND1$ und $RND2$ wird erreicht, dass sowohl der Klartext $M$ als auch der Ciphertext $C^*$ bei jedem Auslesevorgang, d.h. bei jeder Abfrage, anders ausfallen.

Vorteilhafterweise ist das RFID-Tag derart ausgestaltet, dass das RFID-Tag noch während des Einlesens der Challenge mit der Verschlüsselung beginnen kann. Ferner können die ersten Bits bzw. Bytes des vom RFID-Tag berechneten Ciphertextes $C^*$ bereits an das Lesegerät übertragen werden, während die nachfolgenden Bits bzw. Bytes des Ciphertextes $C^*$ vom RFID-Tag noch berechnet werden. Mit anderen Worten: das RFID-Tag ist vorzugsweise dazu ausgestaltet, den Ciphertext $C^*$ sukzessive Bit für Bit zu berechnen und die bereits berechneten Bits des Ciphertextes $C^*$ als Teil der Authentifizierungsnachricht an das Lesegerät zu senden, wodurch keine Zwischenspeicher (Register) erforderlich sind und das Kommunikationsprotokoll schneller durchgeführt werden kann.

Wahlweise fließt in den Klartext $M$ ferner eine digitale Signatur des Identifizierungselements des RFID-Tags ein, die vorzugsweise im Speicher des RFID-Tags hinterlegt ist und vom Lesegerät überprüft werden kann.

Gemäß bevorzugter Ausführungsformen wird zur Einsparung von Rechenzeit der Modulus $n$ wie folgt gewählt: $n = 1 \ (mod\,2^{bl \cdot nd})$, wobei $nd$ eine ganze Zahl mit $1 \leq nd < d$ ist, $bl$ die Wortbreite der Prozessoreinheit des RFID-Tags in Bits und $d$ die Länge des Modulus $n$ in Wortbreiten der Prozessoreinheit ist.

In der Praxis wird für einen gegebenen Modulus $n$ die Zahl $R$ typischerweise als die nächst größere Zweierpotenz gewählt, d.h. für einen aus $k$ Bits (z.B. 1024 Bits) bestehenden Modulus $n$ wird $R = 2^k$ gewählt. Gemäß bevorzugter Ausführungsformen der Erfindung wird $R = 2^{bl \cdot (d+sd)}$ gesetzt, wobei $bl$ die Wortbreite der Prozessoreinheit des RFID-Tags, $d$ die Länge des Modulus $n$ in Wortbreiten der Prozessoreinheit und $sd$ ein Sicherheitsparameter ist, der so gewählt ist, dass $bl \cdot sd \geq 1$, vorzugsweise $bl \cdot sd \geq 10$ und am meisten bevorzugt $bl \cdot sd \geq 100$ gilt.

Vorzugsweise ist das Lesegerät nur ein Lesegerät einer Vielzahl von Lesegeräten, die über ein Hintergrundsystem miteinander verbunden sind und auf im Hintergrundsystem hinterlegte Daten zugreifen können, die jeweils mit einem jeweiligen RFID-Tag verknüpft sind.

Gemäß einer bevorzugten Ausführungsform handelt es sich bei dem RFID-Tag um ein UHF-Tag nach dem Standard ISO/IEC 18000-63 bzw. dem Standard Class-1 Gen-2 EPC.

Die vorliegende Erfindung weist insbesondere die folgenden Vorteile auf. Bei der erfindungsgemäßen Verschlüsselung wird keine modulare Reduktion, also keine Division benötigt und es werden nicht mehr Daten erzeugt, als der Länge des Modulus $n$ entspricht. Ferner bietet die Erfindung die Möglichkeit, mit der Berechnung des Ciphertextes $C^*$ zu beginnen, bevor das RFID-Tag alle in die Berechnung eingehenden Daten empfangen hat, und sodann damit zu beginnen, das Ergebnis dieser Berechnung an das Lesegerät zu senden, bevor die Berechnung des Ciphertextes $C^*$ abgeschlossen ist, wodurch Datenübertragung und Berechnung parallel ausgeführt werden können und Transaktionszeit eingespart werden kann. Da es sich bei den erfindungsgemäßen Verfahren um Public-Key-Verfahren handelt, muss lediglich ein öffentlicher Schlüssel auf dem RFID-Tag hinterlegt werden, so dass die Sicherheit des Systems nicht gefährdet ist, wenn ein Angreifer diesen öffentlichen Schlüssel erlangt. Ein weiterer Vorteil der Erfindung besteht darin, dass zur Entschlüsselung des Ciphertextes $C^*$ ein Lesegerät nicht mit einem Hintergrundsystem verbunden sein muss, da der dafür erforderliche private Schlüssel lokal auf dem Lesegerät hinterlegt sein kann. Schließlich besteht ein weiterer Vorteil darin, dass die Erfindung auf herkömmlichen Lesegeräten ohne Hardwaremodifikationen implementiert werden kann.

Wie der Fachmann erkennen wird, lassen sich die die vorstehend beschriebenen und in den Unteransprüchen definierten bevorzugten Ausgestaltungen im Rahmen des ersten Aspekts der Erfindung, im Rahmen des zweiten Aspekts der Erfindung, im Rahmen des dritten Aspekts der Erfindung sowie im Rahmen des vierten Aspekts der Erfindung vorteilhaft implementieren.

Weitere Merkmale, Vorteile und Aufgaben der Erfindung gehen aus der folgenden detaillierten Beschreibung mehrerer Ausführungsbeispiele und Ausführungsalternativen hervor. Es wird auf die Zeichnungen verwiesen, in denen zeigen:

Fig. 1 eine schematische Darstellung eines Systems zur gesicherten Kommunikation zwischen einem RFID-Tag und einem Lesegerät gemäß einer bevorzugten Ausführungsform der Erfindung,

Fig. 2 eine schematische Detailansicht eines RFID-Tags des Systems von Figur 1,

Fig. 3 eine schematische Darstellung einer bevorzugten Ausführungsform eines erfindungsgemäßen Verfahrens zur gesicherten Kommunikation zwischen einem RFID-Tag und einem Lesegerät des Systems von Figur 1, und

Fig. 4 einen Algorithmus zur Implementierung des erfindungsgemäßen Verfahrens von Figur 3.

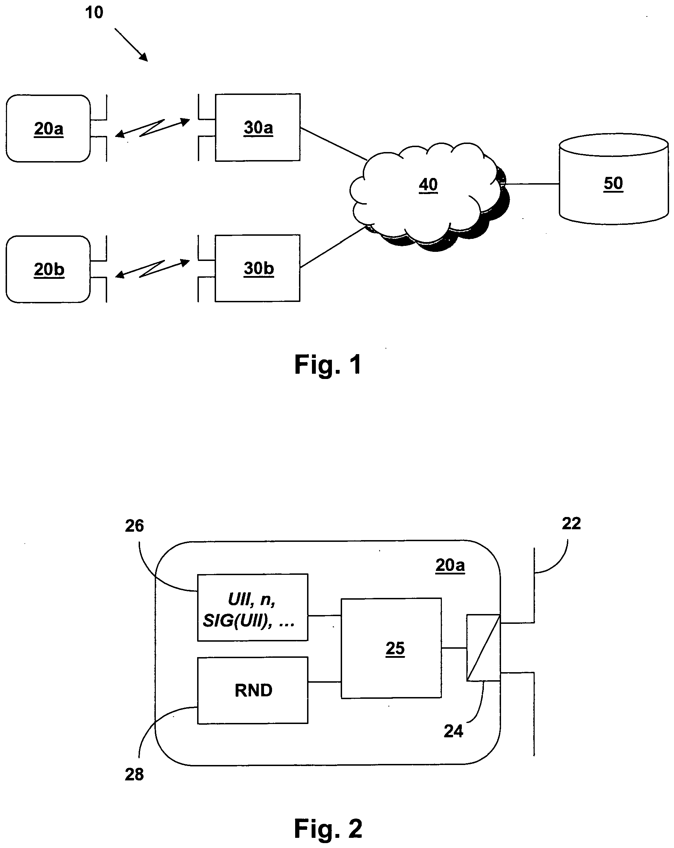

Figur 1 zeigt eine schematische Darstellung eines Systems 10 zur Kommunikation zwischen einem RFID-Tag und einem Lesegerät gemäß einer bevorzugten Ausführungsform der Erfindung. Bei dem System 10 könnte es sich beispielsweise um ein elektronisches Ticketing-System handeln, bei dem ein RFID-Tag ein elektronisches Ticket darstellt, das eine Person mit sich trägt.

Das System 10 umfasst beispielhaft zwei RFID-Tags, nämlich das RFID-Tag 20a und das RFID-Tag 20b, die jeweils über die Luftschnittstelle mit einem Lesegerät 30a bzw. einem Lesegerät 30b kommunizieren können, in dessen Kommunikations- bzw. Lesebereich sich das jeweilige RFID-Tag 20a, 20b befindet. Vorzugsweise handelt es sich bei den RFID-Tags 20a, 20b um RFID-Tags gemäß dem Standard ISO/IEC 18000-63 bzw. EPC Class 1 Generation 2, die hier auch als EPC Tags bezeichnet werden.

Die Lesegeräte 30a, 30b sind über ein geeignetes Kommunikationsnetzwerk 40 mit einem Hintergrundsystem bzw. Backendsystem 50 verbunden, in dem vorzugsweise in einer Datenbank mit den RFID-Tags 20a, 20b verknüpfte Daten hinterlegt sind. Neben den Lesegeräten 30a, 30b können in das in Figur 1 dargestellte System 10 noch eine Vielzahl weiterer Lesegeräte integriert sein, die über das Kommunikationsnetzwerk 40 mit dem Hintergrundsystem 50 in Kommunikation stehen und auf die dort hinterlegten Daten zugreifen können. Der Übersichtlichkeit halber sind in Figur 1 lediglich zwei RFID-Lesegeräte 30a, 30b und zwei RFID-Tags, nämlich die RFID-Tags 20a, 20b, dargestellt. Selbstverständlich ist das in Figur 1 dargestellte System 10 jedoch dazu ausgestaltet, dass neben den RFID-Tags 20a, 20b noch eine Vielzahl weiterer RFID-Tags in diesem System 10 betrieben werden können.

Figur 2 zeigt eine Detailansicht des beispielhaften RFID-Tags 20a des Systems 10 von Figur 1, in der die für die vorliegende bevorzugte Ausführungsform der Erfindung wesentlichen Komponenten des RFID-Tags 20a schematisch dargestellt sind. Das RFID-Tag 20a, dessen Aufbau bevorzugt identisch zum Aufbau des RFID-Tags 20b sein kann, aber nicht sein muss, umfasst eine externe oder interne Antenneneinrichtung 22 zur jeweiligen Kommunikation über die Luftschnittstelle mit den Lesegeräten 30a, 30b des Systems 10 von Figur 1. Die Antenneneinrichtung 22 steht über eine Input-/Output-Schnittstelle 24 in Kommunikation mit einer Prozessoreinheit 25, die auf einen Speicher 26 des RFID-Tags 20a zum Speichern und zum Auslesen von Daten zugreifen kann.

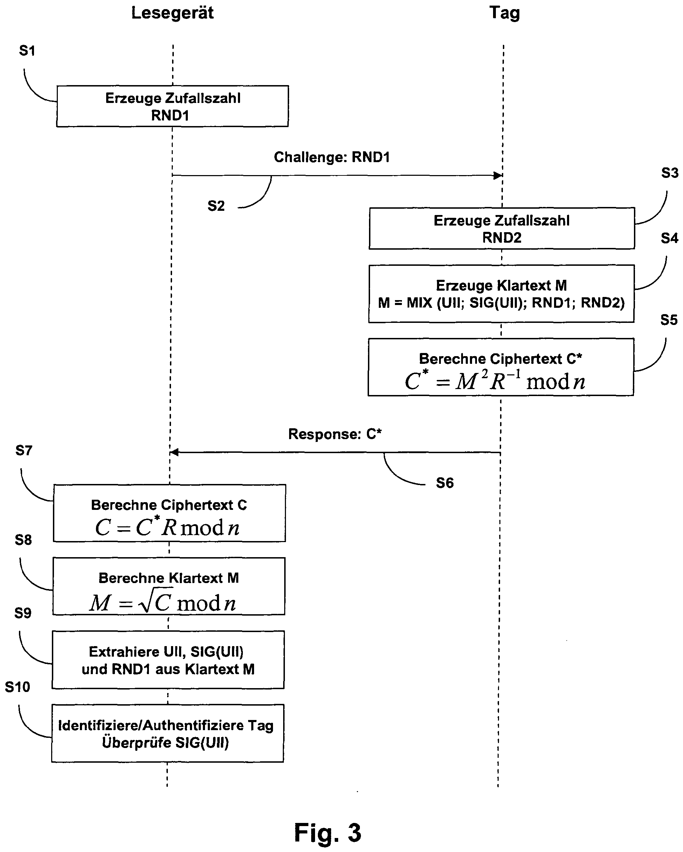

In dem in Figur 2 dargestellten Speicher 26 des RFID-Tags 20a, bei dem es sich beispielsweise um ein ROM und/oder EEPROM (Flash-Speicher) handeln kann, sind die Daten, die für die bevorzugte, nachstehend im Detail beschriebene erfindungsgemäße gesicherte Kommunikation des RFID-Tags 20a mit einem der Lesegeräte 30a, 30b verwendet werden, hinterlegt bzw. können dort hinterlegt werden. Insbesondere ist im Speicher 26 des RFID-Tags 20a wenigstens ein Identifizierungselement hinterlegt, das eine eindeutige Identifizierung des RFID-Tags 20a und/oder des mit dem RFID-Tag 20a versehenen Objektes ermöglicht. Bei dem im Speicher 26 hinterlegten Identifizierungselement kann es sich beispielsweise um ein TID-Element ("Tag Identifier") oder ein UII-Element ("Unique Item Identifier") handeln, vorzugsweise um den dem Fachmann aus dem EPC Standard bekannten Electronic Product Code (EPC). Wie sich dies der Figur 2 entnehmen lässt, sind im Speicher 26 des RFID-Tags 20a ferner ein öffentlicher Schlüssel *n* sowie vorzugsweise eine digitale Signatur des im Speicher 26 hinterlegten Identifizierungselements, beispielsweise die digitale Signatur des UII-Elements, die in Figur 2 als SIG(UII) gekennzeichnet ist, hinterlegt, deren Zweck nachstehend im Zusammenhang mit Figur 3 detaillierter beschrieben wird.

Vorzugsweise umfasst das RFID-Tag 20a ferner einen Zufallszahlengenerator 28 (RND) zur Erzeugung von Zufallszahlen, die für die gesicherte Kommunikation zwischen dem RFID-Tag 20a und einem der Lesegeräte 30a, 30b verwendet werden, wie dies nachstehend im Zusammenhang mit Figur 3 im Detail beschrieben wird. Obgleich in Figur 2 der Zufallszahlengenerator 28 als separate Einheit dargestellt ist, wird der Fachmann erkennen, dass der Zufallszahlengenerator 28 auch ein Teil der Prozessoreinheit 25 sein oder als ein Softwaremodul der Prozessoreinheit 25 implementiert sein könnte. Ebenso könnte der Speicher 26 als Teil der Prozessoreinheit 25 ausgestaltet sein.

Neben dem Zugriff auf den Speicher 26 des RFID-Tags 20a sowie der internen Kommunikation mit der Input-/Output-Schnittstelle 24 und dem Zufallszahlengenerator 28 beispielsweise über ein Bussystem ist die Prozessoreinheit 25 des RFID-Tags 20a vorzugsweise ferner dazu ausgestaltet, die nachstehend im Zusammenhang mit Figur 3 beschriebenen Schritte auf Seiten des RFID-Tags 20a durchzuführen bzw. zu veranlassen, um eine gesicherte Kommunikation zwischen dem RFID-Tag 20a und einem der Lesegeräte 30a, 30b zu ermöglichen.

Sobald ein Lesegerät, beispielsweise das Lesegerät 30a, erfasst, dass sich ein RFID-Tag, beispielsweise das RFID-Tag 20a, in dessen Kommunikationsbereich befindet, wird das in Figur 3 skizzierte Kommunikationsprotokoll vom Lesegerät 30a angestoßen. Dabei generiert in Schritt S1 von Figur 3 das Lesegerät 30a zunächst eine erste Zufallszahl *RND1* (auch Nonce genannt) und sendet diese erste Zufallszahl *RND1* als Challenge im Rahmen eines Challenge-Response-Verfahrens in Schritt S2 von Figur 3 an das RFID-Tag 20a. Vorzugsweise in Reaktion auf den Empfang der ersten Zufallszahl *RND1* vom Lesegerät 30a erzeugt in Schritt S3 von Figur 3 das RFID-Tag 20a eine zweite Zufallszahl *RND2*. Dabei wird diese zweite Zufallszahl *RND2* vorzugsweise von dem Zufallszahlengenerator 28 des RFID-Tags 20a erzeugt, und zwar unabhängig von der ersten Zufallszahl *RND1*.

Wie dies nachstehend im Detail beschrieben wird, fließen vorzugsweise sowohl die erste vom Lesegerät 30a beigesteuerte Zufallszahl *RND1* als auch die zweite vom RIFD-Tag 20a beigesteuerte Zufallszahl *RND2* in den vom RFID-Tag 20a zu verschlüsselnden und an das Lesegerät 30a zu übertragenden Klartext *M* ein. Da der zu verschlüsselnde Klartext *M* somit ein zufälliges, sich von Auslesevorgang zu Auslesevorgang änderndes Element aufweist, wird bei jedem Auslesevorgang auch ein anderer verschlüsselter Klartext *M*, d.h. ein anderer Ciphertext, vom RFID-Tag 20a an das Lesegerät 30a übertragen. Hierdurch kann vermieden werden, dass ein Angreifer ein RFID-Tag anhand eines vom diesem RFID-Tag ausgesendeten, unveränderlichen Ciphertextes identifizieren kann. Darüber hinaus hat die vom Lesegerät 30a erzeugte erste Zufallszahl *RND1*, wie vorstehend bereits erwähnt, die Funktion einer Challenge im Rahmen eines dem Fachmann bekannten Challenge-Response-Verfahrens zur Authentifizierung des RFID-Tags 20a gegenüber dem Lesegerät 30a.

In Schritt S4 von Figur S3 wird vom RFID-Tag 20a ein zu verschlüsselnder Klartext $M$ erzeugt, der es dem Lesegerät 30a ermöglicht, das den verschlüsselten Klartext $M$ empfängt und entschlüsselt, das RFID-Tag 20a zu identifizieren. Hierzu fließt insbesondere ein Identifizierungselement in den Klartext $M$ ein, das eine eindeutige Identifizierung des RFID-Tags 20a und/oder des mit dem RFID-Tag 20a versehenen Objekts ermöglicht. Bei der in den Figuren dargestellten bevorzugten Ausführungsform handelt es sich bei dem Identifizierungselement um das im Speicher 26 des RFID-Tags 20a hinterlegte UII-Element.

Damit das Lesegerät 30a die Echtheit des UII-Elements des RFID-Tags 20a überprüfen kann, fließt in den Klartext $M$ vorzugsweise ferner eine digitale Signatur des UII-Elements ein. Vorzugsweise ist eine digitale Signatur des UII-Elements im Speicher 26 des RFID-Tags 20a hinterlegt, wie dies in Figur 2 mit der Bezeichnung SIG(UII) angedeutet ist, damit diese nicht bei jedem Auslesevorgang vom RFID-Tag 20a neu berechnet werden muss. Wie dies dem Fachmann bekannt ist, lässt sich eine digitale Signatur des UII-Elements des RFID-Tags 20a beispielsweise dadurch erstellen, dass auf das UII-Element im Rahmen eines Public-Key-Verfahrens ein privater Schlüssel angewendet wird. Zur Überprüfung der digitalen Signatur des UII-Elements durch das Lesegerät 30a wird ein zum privaten Schlüssel passender öffentlicher Schlüssel auf die digitale Signatur angewendet.

Vorzugsweise fließen neben dem UII-Element und der digitalen Signatur des UII-Elements ferner, wie bereits vorstehend beschrieben, sowohl die vom Lesegerät 30a bereitgestellte erste Zufallszahl $RND1$ als auch die vom RFID-Tag 20a bereitgestellte zweite Zufallszahl $RND2$ in den Klartext $M$ ein. Dies erfolgt vorzugsweise mittels einer auf der Prozessoreinheit 25 des RFID-Tags 20a implementierten Interleaving-Operation MIX, die dazu ausgestaltet ist, das UII-Element, die digitale Signatur des UII-Elements, die erste Zufallszahl $RND1$ und die zweite Zufallszahl $RND2$ miteinander zu vermischen bzw. zu verwürfeln. Dabei kann die Vermischung durch die Interleaving-Operation MIX beispielsweise auf Byte-Ebene erfolgen. Das Ergebnis der Anwendung der Interleaving-Operation MIX auf das UII-Element, die digitale Signatur des UII-Elements, die erste Zufallszahl $RND1$ und die zweite Zufallszahl $RND2$ ist der zu verschlüsselnde Klartext $M$. Die aus den Zufallszahlen $RND1$ und $RND2$ stammenden Bits des Klartextes $M$ können als Padding-Bits betrachtet werden. Dabei kann es vorteilhaft sein, durch eine geeignete Wahl der Längen der Zufallszahlen $RND1$ und $RND2$ zu erreichen, dass der Klartext $M$ dieselbe Länge wie der Modulus $n$ aufweist, beispielsweise 1024 Bits.

Nachdem in Schritt S4 von Figur 3 der unter anderem das UII-Element enthaltende Klartext $M$ vom RFID-Tag 20a erstellt worden ist, wird dieser Klartext $M$ in Schritt S5 von Figur 3 folgendermaßen vom RFID-Tag 20a verschlüsselt. Wie beim herkömmlichen Rabin-Verfahren wird der Klartext $M$ zunächst quadriert. Zur Erzeugung des Ciphertextes wird das Ergebnis dieser Quadratur jedoch anschließend nicht wie beim herkömmlichen Rabin-Verfahren einer Modulo-Operation mit dem Modulus $n$ unterzogen, sondern es wird das Montgomery-Residuum des quadrierten Klartextes gebildet. Allgemein wird das Montgomery-Residuum ("Montgomery reduction") einer ganzen Zahl $T$ modulo $n$ hinsichtlich einer ganzen Zahl $R$ definiert als $TR^{-1}$ mod$n$, wobei $R$ größer als der Modulus $n$ ist, $R$ und der Modulus $n$ teilerfremd sind (d.h. ggT($R,n$)=1) und $0 \leq T < nR$ (siehe Kapitel 14.3.2 von A. J. Menezes, P.C. van Oorschot, S.C. Vanstone, "Handbook of Applied Cryptography"). In der Literatur wird die ganze Zahl $R$ zuweilen als Montgomery-Basis bezeichnet.

Im Rahmen der vorliegenden Erfindung wird das vom RFID-Tag 20a berechnete Montgomery-Residuum des Quadrats des Klartextes $M$ modulo $n$ hinsichtlich der ganzen Zahl $R$ als der Ciphertext $C^*$ definiert, d.h. $C^* = M^2 R^{-1}$ mod$n$, wobei die ganze Zahl $R,$ wie vorstehend bereits erwähnt, größer als der Modulus $n$ gewählt wird. In der Praxis wird für einen gegebenen Modulus $n$ die Zahl $R$ typischerweise als die nächst größere Zweierpotenz gewählt, d.h. für einen aus $k$ Bits (z.B. 1024 Bits) bestehenden Modulus $n$ wird $R = 2^k$ gewählt. Weitere gemäß der vorliegenden Erfindung bevorzugte Wahlmöglichkeiten der Zahl R werden weiter unten beschrieben.

Nachdem in Schritt S5 von Figur 3 der Ciphertext $C^* = M^2 R^{-1}$ mod$n$ vom RFID-Tag 20a berechnet worden ist, wird in Schritt S6 von Figur 3 der so berechnete Ciphertext $C^*$ als Response auf die in Schritt S2 von Figur 3 übersendete Challenge an das Lesegerät 30a gesendet. Der Fachmann wird jedoch erkennen, dass prinzipiell statt des Ciphertextes $C^* = M^2 R^{-1}$ mod$n$ auch ein vom RFID-Tag 20a nochmals weiterverarbeiteter Ciphertext $C^{**}$ an das Lesegerät 30a übertragen werden könnte, sofern das RFID-Tag 20a und das Lesegerät 30a untereinander vereinbart haben, wie das Lesegerät 30a aus dem vom RFID-Tag 20a weiterverarbeiteten und übermittelten Ciphertext $C^{**}$ auf den Ciphertext $C^* = M^2 R^{-1}$ mod$n$ zurückrechnen kann.

In Schritt S7 von Figur 3 wird zunächst der vom RFID-Tag 20 in Schritt S6 übermittelte Ciphertext $C^*$ mit R multipliziert und anschließend die Modulo-Operation mit dem Modulus $n$ durchgeführt, d.h. $C^*R$ mod$n$. Setzt man für $C^*$ den im Zusammenhang mit Schritt S5 von Figur 3 beschriebenen Ausdruck ein, so erhält man: $C^* R$ mod$n = M^2R^{-1}R$ mod$n = M^2$mod$n.$ Wie der Fachmann erkennt, handelt es sich bei dem letzten Ausdruck $M^2$ mod$n$ um den Ciphertext des bekannten Rabin-Verfahrens, der hier als Ciphertext $C$ bezeichnet wird. Mit anderen Worten: In Schritt S7 von Figur 3 wird der aus dem bekannten Rabin-Verfahren bekannte Ciphertext $C = M^2$ mod $n$ erhalten, indem der vom RFID-Tag 20 gesendete Ciphertext $C^*$ mit $R$ multipliziert wird und anschließend die Modulo-Operation mit dem Modulus $n$ durchgeführt wird.

Wie im Fall des klassischen Rabin-Verfahrens kann nun in Schritt S8 von Figur 3 durch das Lesegerät 30a der ursprünglich in Schritt S4 vom RFID-Tag 20a erzeugte Klartext *M* ermittelt werden, indem die Quadratwurzel des in Schritt S7 bestimmten Ciphertextes *C* modulo *n* berechnet wird. Wie bereits vorstehend beschrieben, kann hierzu unter Verwendung des dem Lesegerät 30a vorliegenden privaten Schlüssel in Form der Primzahlen *p* und *q* der Chinesische Restklassensatz (CRT) ausgenutzt werden, um die vier Quadratwurzeln des Ciphertextes *C* zu berechnen. Vorzugsweise wird mittels einer geeigneten Markierung dem Lesegerät 30a gegenüber deutlich gemacht, welche der vier Quadratwurzeln des Ciphertextes *C* der vom RFID-Tag 20a ursprünglich generierte Klartext *M* ist. Beispielsweise kann die vom Lesegerät 30a übermittelte erste Zufallszahl *RND1* dazu verwendet werden, die richtige Quadratwurzel, d.h. den richtigen Klartext *M*, auszuwählen.

Wie vorstehend beschrieben, wird der Klartext *M* in Schritt S4 von Figur 3 generiert, indem die Interleaving-Operation MIX durchgeführt wird. Wie der Fachmann erkennt, muss auf Seiten des Lesegeräts 30a diese Interleaving-Operation wieder rückgängig gemacht bzw. invertiert werden, um das UII-Element des RFID-Tags 20a, die digitale Signatur SIG(UII) des UII-Elements, die erste Zufallszahl *RND1* und die zweite Zufallszahl *RND2* aus dem Klartext *M* extrahieren zu können. Diese Invertierung der Interleaving-Operation MIX und die Extraktion der im Klartext *M* enthaltenen Informationen erfolgt vorzugsweise in Schritt S9 von Figur 3. Selbstverständlich muss zwischen dem RFID-Tag 20a und dem Lesegerät 30a vereinbart worden sein, welche Interleaving-Operation in Schritt S4 von Figur 3 verwendet wird, um in Schritt S9 von Figur 3 die Umkehrfunktion hierzu anwenden zu können.

Nach der erfolgreichen Durchführung von Schritt S9 von Figur 3 liegen dem Lesegerät 30a das UII-Element des RFID-Tags 20a, die digitale Signatur des UII-Elements, die erste Zufallszahl *RND1* und die zweite Zufallszahl *RND2* vor. Anhand dieser vorliegenden Elemente kann das Lesegerät 30a das RFID-Tag 20a identifizieren und authentifizieren. Vorzugsweise wird in Schritt S10 von Figur 3 ferner die Unversehrtheit des UII-Elements des RFID-Tags 20a vom Lesegerät 30a überprüft, indem das Lesegerät 30a die digitale Signatur des UII-Elements überprüft. Es ist denkbar, dass hierzu das Lesegerät 30a auf das Hintergrundsystem 50 zugrifft, um anhand des UII-Elements des RFID-Tags 20a einen öffentlichen Schlüssel zu finden, der zu dem privaten Schlüssel passt, mit dem die digitale Signatur des UII-Elements des RFID-Tags 20a ursprünglich erstellt worden ist.

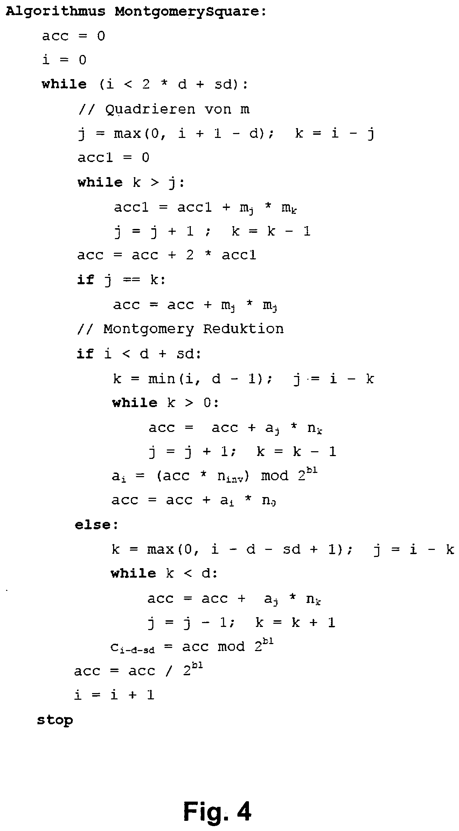

Nachstehend wird unter Bezugnahme auf Figur 4 eine bevorzugte Implementierung der erfindungsgemäßen Berechnung des Ciphertextes *C**, d.h. der Verschlüsselung des Klartextes *M,* durch das RFID-Tag 20a beschrieben, deren Ablauf sich grob in drei Abschnitte gliedern lässt.

In einem ersten Abschnitt der Verschlüsselung wird der Klartext M sukzessive, vom niederwertigsten bis zum höchstwertigsten Byte verarbeitet. Wenn die Interleaving-Operation MIX, dazu ausgestaltet ist, die erste Zufallszahl *RND1* des Lesegeräts 30a gleichmäßig verteilt in den Klartext *M* einzustreuen, kann bereits nach Empfang des ersten Bytes der Zufallszahl *RND1* mit dem ersten Verschlüsselungsabschnitt begonnen und so lange gerechnet werden, wie Bytes des Klartextes *M* zur Verfügung stehen. Nach Empfang des nächsten Bytes der Zufallszahl *RND1* vom Lesegerät 30a wird die Verschlüsselung so lange weiter berechnet, bis der gesamte Klartext *M* verschlüsselt worden ist.

In einem zweiten Abschnitt der Verschlüsselung erfolgt eine systemweit vereinbarte Anzahl zusätzlicher Montgomery-Schritte, d.h. die Zahl *R* wird entsprechend größer als die nächste oberhalb des Modulus *n* zur Verfügung stehende Zweierpotenz gewählt. Der Grund für diese Maßnahme ist, dass sich die Wahrscheinlichkeit verringert, dass das Endergebnis der Verschlüsselung größer ist als der Modulus *n* (was ein Angreifer natürlich erkennen und zum Anlass für eine Seitenkanalattacke nehmen könnte). Die Wahrscheinlichkeit eines solchen Überlaufs ist beschränkt durch $2^{-bl \cdot sd}$, wobei *bl* die verwendete Bitlänge der Langzahloperation angibt und *sd* die Anzahl der zusätzlichen Runden (= Ziffern) im zweiten Abschnitt der Verschlüsselung. Es ist ratsam, diese Zahlen so zu wählen, dass vorzugsweise $bl \cdot sd \geq 10$ und am meisten bevorzugt $bl \cdot sd \geq 100$ gilt, und dafür auf eine explizite Prüfung auf Überlauf zu verzichten. Sollte es trotzdem zufällig zu einem Überlauf kommen, kann das Ergebnis ohne modulare Reduktion an das Lesegerät 30a gesendet werden.

Im dritten Abschnitt der Verschlüsselung werden schließlich sukzessive die verschlüsselten Ausgabedaten erzeugt, die folglich überlappend mit dem Abschluss der Berechnung an das Lesegerät 30a gesendet werden können. Dies ist besonders vorteilhaft, da wegen der Länge des Ciphertextes *C** (bei der üblichen und notwendigen Länge des Modulus n von 1024 Bit ergibt sich ein Ciphertext von 128 Byte) die Daten ohnehin nicht in einem einzigen Übertragungsschritt (Datenblock) gesendet werden können. Handelsübliche UHF-RFID-Lesegeräte (nach ISO/IEC 18000-63) sind nicht dafür eingerichtet größere Datenblöcke zu übertragen, sondern begrenzen die Blockgröße nach dem Stand der Technik auf 2 bis 16 Byte. Durch die abschnittsweise Übertragung der Daten des Ciphertextes *C** (dem sogenannten Chaining) werden die Daten in sequentieller Folge portionsweise übertragen. Die dadurch entstehende Überlappung zwischen Berechnung und Übertragung kann dahingehend sehr vorteilhaft genutzt werden, dass bereits nach dem Empfang der ersten Daten parallel zur Datenübertragung mit der Berechnung begonnen werden kann.

Fig. 4 zeigt einen Algorithmus ("MontgomerySquare") zur Berechnung des Ciphertextes *C**, d.h. zur Verschlüsselung des Klartextes *M,* durch das RFID-Tag 20a. Für die nachstehende Beschreibung dieses Algorithmus sind die folgenden Definitionen hilfreich. Es wird angenommen, dass die Prozessoreinheit 25 des RFID-Tags 20a eine Wortbreite von *bl* Bits aufweist. Dabei ist die Prozessoreinheit 25 des RFID-Tags 20a dazu ausgestaltet, zwei *bl* Bit breite Worte miteinander multiplizieren zu können, wobei das Ergebnis bis zu *2·bl* Bit lang sein kann. In nicht beschränkender Art und Weise wird ferner angenommen, dass der Modulus *n* höchstens eine Länge von *d* Worten und damit *d·bl* Bits aufweist. Gemäß einer bevorzugten Ausführungsform der Erfindung wird ein Sicherheitsparameter *sd* derart gewählt, dass die vorstehend beschriebene Überlaufwahrscheinlichkeit in der Größenordnung $2^{-bl \cdot sd}$ liegt. Wie der Fachmann erkennt, bedingt ein größerer Wert von *sd* eine längere Rechenzeit. Es wird nicht beschränkend $R = 2^{bl \cdot (d+sd)}$ gesetzt. Wie vorstehend bereits beschrieben, sollte *R* bzw. der Sicherheitsparameter *sd* vorzugsweise so gewählt werden, dass vorzugsweise $bl \cdot sd \geq 10$ und am meisten bevorzugt $bl \cdot sd \geq 100$ gilt.

Zu einem Klartext *M,* bei dem es sich um eine Zahl handelt, mit $0 \leq M < n$ kann der Ciphertext *C\** mit $C^* = M^2 \cdot R^{-1} \bmod n$ mittels der zwei folgenden Schritte berechnet werden:

1. Berechne ein *a* so das gilt: $a = -M^2 / n \bmod R$, $0 \leq a < R$.
2. Setze $C^* = (M^2 + a \cdot n)/ R$

Hierbei ist die Division im zweiten Schritt ohne Rest ausführbar. Da $0 \leq M < n$ kann bei einem zufällig gewähltem *M* angenommen werden, dass der Wert *a* im Intervall [0, ... , *R*-1] ebenfalls gleich verteilt ist. Somit ist die Wahrscheinlichkeit für einen Überlauf von *C\** (d.h. es gilt $C^* \geq n$) höchstens gleich *n/R*, und damit höchstens gleich $2^{-bl \cdot sd}$.

Zu einer ganzen Zahl *x* sei $(x_0, x_1,..., x_i,..., x_{v-1})$ die Darstellung von *x* zur Basis $2^{bl}$, d.h. es gilt $x = \sum_{i=0}^{v-1} 2^{bl \cdot i} \cdot x_i$, $0 \leq x_i < 2^{bl}$. Seien $(M_0,..., M_{d-1})$, $(n_0,..., n_{d-1})$, $(a_0,..., a_{d+sd-1})$, und $(C^*_0, ..., C^*_{d-1})$ die Darstellungen von *M, n, a* und *C\** zur Basis $2^{bl}$. Ferner sei $n_{inv}$ die durch $n \cdot n_{inv} = -1 (\bmod 2^{bl})$ und $0 \leq n_{inv} < 2^{bl}$ eindeutig bestimmte ganze Zahl. Dann können *a* und *C\** nach dem in Figur 4 dargestellten Algorithmus "MontgomerySquare" berechnet werden, wobei zu beachten ist, dass in dem in Figur 4 dargestellten Algorithmus die Binärziffern $C^*_0, ..., C^*_{d-1}$ von *C\** mit $C_{i-s-sd}$ bezeichnet werden.

Hinsichtlich des in Figur 4 dargestellten Algorithmus "MontgomerySquare" wird der Fachmann folgendes erkennen.

Nach i Durchläufen der Hauptschleife gilt $a = -M^2/n \ (\bmod 2^{bl \cdot \min(i, d+sd)})$ und im Fall $i > d + sd$ gilt außerdem $C^* = (M^2 + a \cdot n)/R \ (\bmod 2^{bl \cdot (i-d-sd)})$. Beim *i*-ten Durchlauf der Hauptschleife werden nur die ersten i Eingabewerte $M_0, ..., M_{i-1}$ benötigt, so dass dieser Durchlauf schon nach Vorliegen der ersten *i* Eingabewerte durchgeführt werden kann. Der *i*-te Ausgabewert kann schon nach *i+s+sd* Durchläufen der Hauptschleife ausgegeben werden. Somit ist die oben beschriebene Überlappung von Eingabe, Verarbeitung und Ausgabe erfindungsgemäß ohne weiteres möglich.

Von dem Zwischenwert *a* werden im *i*-ten Durchlauf der Hauptschleife höchstens die Stellen $a_i, ..., a_{i-d}+1$ benötigt, so dass *d* Worte zu je *bl* Bits zur Speicherung des gerade benötigten Teils von a ausreichen.

Der Algorithmus benötigt insgesamt höchstens $(d + 1)(3d/2 + sd)$ Multiplikationen.

Gemäß einer bevorzugten Ausführungsform der Erfindung wird zur Einsparung von Rechenzeit der Modulus *n* wie folgt gewählt: $n = 1 (\bmod 2^{bl \cdot nd})$, wobei *nd* eine ganze Zahl mit $1 \leq nd < d$ ist. In diesem Fall gilt $n_{inv} = 2^{bl} -1$. Die Multiplikation mit $n_{inv} = 2^{bl} -1$ (modulo $2^{bl}$) ist dann eine einfache Negation. Abgesehen von der letzten Stelle $n_0$ sind die niederwertigen Stellen $n_{nd-1},..., n_1$ von n dann gleich null, so dass im Vergleich zu dem oben beschriebenen Algorithmus "MontgomerySquare" $nl \cdot (d+sd)$ Multiplikationen eingespart werden können. Wählt man z.B. $nl = d/2$, so liegt die Anzahl der Multiplikationen in der Größenordnung $d(d+sd)$. Dies spart etwa ein Drittel der Multiplikationen im Vergleich zum oben beschriebenen Algorithmus "MontgomerySquare". Primzahlen *p, q* mit $\log p \approx \log q$, $2^{bl \cdot d-1} < n = p \cdot q < 2^{bl \cdot d}$ und $n = p \cdot q = 1 \ (\bmod 2^{bl \cdot d/2})$ lassen sich leicht konstruieren. Die genannte Bedingung für n bedeutet, dass die Bits der unteren Hälfte (bis auf das letzte Bit) in der Binärdarstellung von *n* gleich null sind. Nach dem heute bekannten Stand der Forschung bedeutet dies keine Einschränkung für die Sicherheit des Verfahrens. Der schnellste derzeit bekannte Algorithmus zur Faktorisierung von beliebigen Zahlen *n* ist das General Number Field Sieve (GNFS). Der einzige bekannte deutlich schnellere Algorithmus, der unter gewissen Umständen eine Zahl $n = p \cdot q$, mit $\log p \approx \log q$ für Primzahlen *p, q,* faktorisieren kann, ist das Special Number Field Sieve (SNFS). Für ein zufällig gewähltes $n = p \cdot q,$ bei dem die untere Hälfte der Bits (bis auf das letzte Bit) gleich null ist, kann man das SNSF aber nicht anwenden.

Wie der Fachmann erkennen wird, müssen die einzelnen Schritte des in Figur 3 dargestellten Kommunikationsprotokolls nicht unbedingt in der dargestellten zeitlichen Abfolge ablaufen. Ersichtlich ist dies nur dort erforderlich, wo die Ergebnisse eines Schrittes die Eingabedaten eines weiteren Schrittes darstellen. Ferner wird der Fachmann erkennen, dass obgleich vorstehend bevorzugte Ausführungsformen der Erfindung unter Bezugnahme auf ein RFID-Tag beschrieben worden sind, bei dem es sich vorzugsweise um ein UHF-Tag nach ISO/IEC 18000-63 bzw. Class-1 Gen-2 EPC handelt, die Erfindung ebenfalls mit anderen Arten von ressourcenbeschränkten portablen Datenträgern vorteilhaft eingesetzt werden kann, die sich über die Luftschnittstelle gegenüber einem Lesegerät authentisieren müssen, wie beispielsweise kontaktlose Chipkarten, Tokens und dergleichen.

**Patentansprüche**

1. Verfahren zur gesicherten Kommunikation zwischen einem RFID-Tag (20a, 20b) und einem Lesegerät (30a, 30b), wobei das Verfahren die folgenden Schritte umfasst, die im RFID-Tag (20a, 20b) durchgeführt werden:

   • Empfangen einer Zufallszahl RND1 als Challenge im Rahmen eines Challenge-Response-Verfahrens von dem Lesegerät;

   • in Reaktion auf den Empfang der Zufallszahl RND1, Verschlüsseln eines Klartextes $M$, in den ein Identifizierungselement (UII) des RFID-Tags (20a, 20b) oder eines damit versehenen Objekts sowie die Zufallszahl RND1 einfließt, zur Berechnung eines Ciphertextes $C^*$, indem das Montgomery-Residuum des Quadrats des Klartextes $M$ modulo $n$ hinsichtlich einer Montgomery-Basis $R$, d.h. $C^* = M^2 R^{-1} \bmod n$, berechnet wird, und

   • Aussenden einer Authentisierungsnachricht an das Lesegerät (30a, 30b), wobei die Authentisierungsnachricht den Ciphertext $C^*$ enthält, wobei es sich bei dem Modulus $n = p \cdot q$ um den öffentlichen Schlüssel des Lesegeräts (30a, 30b), bei den Primzahlen $p$, $q$ um den privaten Schlüssel des Lesegeräts (30a, 30b) und bei der Montgomery-Basis $R$ um eine ganze Zahl handelt, die größer als der Modulus $n$ ist.

2. Verfahren zur gesicherten Kommunikation zwischen einem RFID-Tag (20a, 20b) und einem Lesegerät (30a, 30b), wobei das Verfahren die folgenden Schritte umfasst, die im Lesegerät (30a, 30b) durchgeführt werden:

   • Senden einer Zufallszahl RND1 als Challenge im Rahmen eines Challenge-Response-Verfahrens an das RFID-Tag (20a, 20b)

   • Empfangen einer Authentisierungsnachricht vom RFID-Tag (20a, 20b), die einen auf verschlüsselten Klartext $M$ enthält, in den ein Identifizierungselement (UII) des RFID-Tags (20a, 20b) oder eines damit versehenen Objekts sowie die Zufallszahl RND1 eingeflossen ist, und

   • Entschlüsseln des verschlüsselten Klartextes $M$, wobei der Schritt des Entschlüsselns die Multiplikation des verschlüsselten Klartextes $M$ mit einer Montgomery-Basis $R$ und die anschließende Durchführung der Modulo-Operation mit dem Modulus $n$ umfasst, wobei es sich bei dem Modulus $n = p \cdot q$ um den öffentlichen Schlüssel des Lesegeräts (30a, 30b), bei den Primzahlen $p$, $q$ um den privaten Schlüssel des Lesegeräts (30a, 30b) und bei der Montgomery-Basis $R$ um eine ganze Zahl handelt, die größer als der Modulus $n$ ist.

3. Verfahren nach Anspruch 1, wobei in den Klartext M ferner eine vom RFID-Tag (20a, 20b) erzeugte zweite Zufallszahl *RND2* einfließen.

4. Verfahren nach Anspruch 3, wobei die in den Klartext $M$ einfließenden Daten mittels einer Interleaving-Operation verwürfelt werden, um die vom Lesegerät (30a, 30b) und vom RFID-Tag (20a, 20b) stammenden zufälligen Daten zufällig über den Klartext $M$ zu verteilen.

5. Verfahren nach Anspruch 3, wobei das RFID-Tag (20a, 20b) derart ausgestaltet ist, dass der Ciphertext $C^*$ sukzessive Bit für Bit berechnet wird und die bereits berechneten Bits des Ciphertextes $C^*$ als Teil der Authentifizierungsnachricht an das Lesegerät (30a, 30b) gesendet werden, so dass das RFID-Tag (20a, 20b) noch während des Einlesens der Challenge in Form der ersten Zufallszahl *RND1* mit der Verschlüsselung beginnen kann und die ersten Bytes des berechneten Ciphertextes $C^*$ bereits an das Lesegerät (30a, 30b) ausgegeben werden können, während die nachfolgenden Bytes des Ciphertextes $C^*$ noch berechnet werden.

6. Verfahren nach Anspruch 1 oder 2, wobei ferner eine digitale Signatur (SIG(UII)) des Identifizierungselements (UII) des RFID-Tags (20a, 20b) in den Klartext $M$ einfließt, die vorzugsweise in der Speichereinheit (26) des RFID-Tags (20a, 20b) hinterlegt ist und vom Lesegerät (30a, 30b) überprüft werden kann.

7. Verfahren nach Anspruch 1 oder 2, wobei zur Einsparung von Rechenzeit der Modulus $n$ wie folgt gewählt wird: $n = 1 \pmod{2^{bl \cdot nd}}$, wobei $nd$ eine ganze Zahl mit $1 \leq nd < d$ ist, $bl$ die Wortbreite der Prozessoreinheit (25) des RFID-Tags (20a, 20b) und $d$ die Länge des Modulus $n$ in Wortbreiten der Prozessoreinheit (25) ist.

8. Verfahren nach Anspruch 1 oder 2, wobei für einen gegebenen Modulus $n$ die Montgomery-Basis $R$ wie folgt gewählt wird: $R = 2^{bl \cdot (d+sd)}$, wobei $bl$ die Wortbreite der Prozessoreinheit (25) des RFID-Tags (20a, 20b), $d$ die Länge des Modulus $n$ in Wortbreiten der Prozessoreinheit (25) und $sd$ ein Sicherheitsparameter ist, der so gewählt ist, dass $bl \cdot sd \geq 1$, vorzugsweise $bl \cdot sd \geq 10$ und am meisten bevorzugt $bl \cdot sd \geq 100$ gilt.

9. RFID-Tag (20a, 20b) zur gesicherten Kommunikation mit einem Lesegerät (30a, 30b), wobei das RFID-Tag (20a, 20b) eine Prozessoreinheit (25) und eine Speichereinheit (26) umfasst, in der ein Identifizierungselement (UII) hinterlegt ist, und wobei die Prozessoreinheit (25) dazu ausgestaltet ist:

   • eine Zufallszahl RND1 als Challenge im Rahmen eines Challenge-Response-Verfahrens von dem Lesegerät zu empfangen;

• in Reaktion auf den Empfang der Zufallszahl RND1, einen Klartext *M,* in den das Identifizierungselement (UII) des RFID-Tags (20a, 20b) oder eines damit versehenen Objekts sowie die Zufallszahl RND1 einfließt, zur Berechnung eines Ciphertextes *C\** zu verschlüsseln, indem das Montgomery-Residuum des Quadrats des Klartextes *M* modulo *n* hinsichtlich einer Montgomery-Basis *R,* d.h. $C^* = M^2 R^{-1} \bmod n$, berechnet wird, und

• eine Authentisierungsnachricht an das Lesegerät (30a, 30b) zu senden, wobei die Authentisierungsnachricht den Ciphertext *C\** enthält und wobei es sich bei dem Modulus $n = p \cdot q$ um den öffentlichen Schlüssel des Lesegeräts (30a, 30b), bei den Primzahlen *p, q* um den privaten Schlüssel des Lesegeräts (30a, 30b) und bei der Montgomery-Basis *R* um eine ganze Zahl handelt, die größer als der Modulus n ist.

10. Lesegerät (30a, 30b) zur gesicherten Kommunikation mit einem RFID-Tag (20a, 20b), wobei das Lesegerät (30a, 30b) eine Prozessoreinheit umfasst, die dazu ausgestaltet ist, eine Zufallszahl RND1 als Challenge im Rahmen eines Challenge-Response-Verfahrens an das RFID-Tag zu senden, und eine Authentisierungsnachricht vom RFID-Tag (20a, 20b) zu empfangen, die einen verschlüsselten Klartext *M* enthält, in den ein Identifizierungselement (UII) des RFID-Tags (20a, 20b) oder eines damit versehenen Objekts sowie die vom Lesegerät generierte Zufallszahl RND1 eingeflossen ist, und den verschlüsselten Klartext *M* zu entschlüsseln, wobei bei der Entschlüsselung der verschlüsselte Klartext *M* mit einer Montgomery-Basis *R* multipliziert und anschließend die Modulo-Operation mit dem Modulus *n* durchgeführt wird, wobei es sich bei dem Modulus $n = p \cdot q$ um den öffentlichen Schlüssel des Lesegeräts (30a, 30b), bei den Primzahlen *p, q* um den privaten Schlüssel des Lesegeräts (30a, 30b) und bei der Montgomery-Basis *R* um eine ganze Zahl handelt, die größer als der Modulus *n* ist.

11. System (10) zur gesicherten Kommunikation mit wenigstens einem RFID-Tag (20a, 20b) gemäß Anspruch 9 und wenigstens einem Lesegerät (30a, 30b) gemäß Anspruch 10.

**Claims**

1. A method for secure communication between an RFID tag (20a, 20b) and a reader (30a, 30b), wherein the method comprises the following steps that are carried out in the RFID tag (20a, 20b):

• receiving a random number *RND1* as a challenge within the framework of a challenge-response method from the reader,

• in reaction to the reception of the random number *RND1*, encrypting a plaintext *M* into which an identification element (UII) of the RFID tag (20a, 20b) or of an object furnished therewith as well as the random number *RND1* are incorporated, for computing a ciphertext *C\** by computing the Montgomery residue of the square of the plaintext *M* modulo *n* with respect to a Montgomery base *R,* i.e. $C^* = M^2 R^{-1} \bmod n,$ and

• sending out an authentication message to the reader (30a, 30b), the authentication message containing the ciphertext *C\**,

wherein the modulus $n=p \cdot q$ is the public key of the reader (30a, 30b), the prime numbers *p, q* are the private key of the reader (30a, 30b), and the Montgomery base *R* is an integer that is larger than the modulus *n.*

2. A method for secure communication between an RFID tag (20a, 20b) and a reader (30a, 30b), wherein the method comprises the following steps that are carried out in the reader (30a, 30b):

• transmitting a random number *RND1* as a challenge within the framework of a challenge-response method to the RFID-tag (20a, 20b),

• receiving from the RFID tag (20a, 20b) an authentication message which contains an encrypted plaintext *M* into which an identification element (UII) of the RFID tag (20a, 20b) or of an object furnished therewith as well as the random number *RND1* have been incorporated, and

• decrypting the encrypted plaintext *M*, the decrypting step comprising multiplying the encrypted plaintext *M* by a Montgomery base *R* and subsequently carrying out the modulo operation with the modulus *n*,

wherein the modulus $n = p \cdot q$ is the public key of the reader (30a, 30b), the prime numbers *p, q* are the private key of the reader (30a, 30b), and the Montgomery base *R* is an integer that is larger than the modulus *n.*

3. The method according to claim 1, wherein there is further incorporated into the plaintext *M* a second random number *RND2* generated by the RFID tag (20a, 20b).

4. The method according to claim 3, wherein the data incorporated into the plaintext *M* are scrambled by means of an interleaving operation in order to distribute the random data stemming from the reader (30a, 30b) and from the RFID tag (20a, 20b) randomly over the plaintext *M*.

**5.** The method according to claim 3, wherein the RFID tag (20a, 20b) is configured such that the ciphertext $C^*$ is computed bit for bit successively and the already computed bits of the ciphertext $C^*$ are transmitted to the reader (30a, 30b) as part of the authentication message, so that the RFID tag (20a, 20b) can begin with the encryption during the read-in of the challenge in the form of the first random number $RND1$, and the first bytes of the computed ciphertext $C^*$ can already be output to the reader (30a, 30b) while the subsequent bytes of the ciphertext $C^*$ are still being computed.

**6.** The method according to claim 1 or 2, wherein there is further incorporated into the plaintext $M$ a digital signature (SIG(UII)) of the identification element (UII) of the RFID tag (20a, 20b), which is preferably deposited in the storage unit (26) of the RFID tag (20a, 20b) and can be checked by the reader (30a, 30b).

**7.** The method according to claim 1 or 2, wherein the modulus n is chosen, for saving computing time, as follows: $n = 1(\bmod\ 2^{bl \cdot nd})$, where $nd$ is an integer with $1 \leq nd < d$, $bl$ is the word width of the processor unit (25) of the RFID tag (20a, 20b), and $d$ is the length of the modulus $n$ in word widths of the processor unit (25).

**8.** The method according to claim 1 or 2, wherein the Montgomery base $R$ is chosen for a given modulus $n$ as follows: $R = 2^{bl \cdot (d+sd)}$, where $bl$ is the word width of the processor unit (25) of the RFID tag (20a, 20b), $d$ is the length of the modulus $n$ in word widths of the processor unit (25), and $sd$ is a security parameter which is so chosen that it holds that $bl \cdot sd \geq 1$, preferably $bl \cdot sd \geq 10$, and most preferably $bl \cdot sd \geq 100$.

**9.** An RFID tag (20a, 20b) for secure communication with a reader (30a, 30b), wherein the RFID tag (20a, 20b) comprises a processor unit (25) and a storage unit (26) in which an identification element (UII) is deposited, and wherein the processor unit (25) is configured for

• receiving a random number $RND1$ as a challenge within the framework of a challenge-response method from the reader,
• in reaction to the reception of the random number $RND1$, encrypting a plaintext $M$ into which the identification element (UII) of the RFID tag (20a, 20b) or of an object furnished therewith as well as the random number $RND1$ are incorporated, for computing a ciphertext $C^*$ by computing the Montgomery residue of the square of the plaintext $M$ modulo $n$ with respect to a Montgomery base $R$, i.e. $C^* = M^2 R^{-1} \bmod n$, and
• transmitting an authentication message to the reader (30a, 30b), the authentication message containing the ciphertext $C^*$, and wherein the modulus $n = p \cdot q$ is the public key of the reader (30a, 30b), the prime numbers $p$, $q$ are the private key of the reader (30a, 30b), and the Montgomery base $R$ is an integer that is larger than the modulus $n$.

**10.** A reader (30a, 30b) for secure communication with an RFID tag (20a, 20b), wherein the reader (30a, 30b) comprises a processor unit which is configured for transmitting a random number $RND1$ as a challenge within the framework of a challenge-response method to the RFID tag, and receiving from the RFID tag (20a, 20b) an authentication message which contains an encrypted plaintext $M$ into which an identification element (UII) of the RFID tag (20a, 20b) or of an object furnished therewith as well as the random number $RND1$ generated by the reader have been incorporated, and decrypting the encrypted plaintext $M$, wherein upon the decryption the encrypted plaintext $M$ is multiplied by a Montgomery base $R$ and subsequently the modulo operation with the modulus $n$ is carried out, wherein the modulus $n = p \cdot q$ is the public key of the reader (30a, 30b), the prime numbers $p$, $q$ are the private key of the reader (30a, 30b), and the Montgomery base $R$ is an integer that is larger than the modulus $n$.

**11.** A system (10) for secure communication with at least one RFID tag (20a, 20b) according to claim 9 and at least one reader (30a, 30b) according to claim 11.

## Revendications

**1.** Procédé de communication sécurisée entre une étiquette RFID (20a, 20b) et un appareil de lecture (30a, 30b), cependant que le procédé comprend les étapes suivantes qui sont accomplies dans l'étiquette RFID (20a, 20b) :

• réception d'un chiffre aléatoire RDN1 en tant que défi dans le cadre d'un procédé défi/réponse de la part de l'appareil de lecture ;
• en réaction à la réception du chiffre aléatoire RDN1, cryptage d'un texte clair $M$ dans lequel est inclus un élément d'identification (UII) de l'étiquette RFID (20a, 20b) ou d'un objet en étant pourvu ainsi que le chiffre aléatoire RDN1, aux fins du calcul d'un texte chiffré $C^*$, ce qui a lieu en ce que le résidu de Montgomery du carré du texte clair $M$ modulo $n$ est calculé par rapport à une base de Montgomery $R$, c'est-à-dire que $C^* = M^2 R^{-1} \bmod n$, et
• émission d'un message d'authentification à l'appareil de lecture (30a, 30b), cependant que le message d'authentification contient le texte chiffré $C^*$, cependant que le modulo $n = p \cdot q$ consiste en la clé publique de l'appareil de lecture (30a, 30b), que les nombres premiers $p$, $q$ consistent en la clé privée de l'appareil de lecture (30a, 30b), et que la base de Montgomery $R$ consiste en un chiffre entier supérieur au modulo $n$.

2. Procédé de communication sécurisée entre une étiquette RFID (20a, 20b) et un appareil de lecture (30a, 30b), cependant que le procédé comprend les étapes suivantes qui sont accomplies dans l'appareil de lecture (30a, 30b) :

> • envoi d'un chiffre aléatoire RDN1 en tant que défi dans le cadre d'un procédé défi/réponse à l'étiquette RFID (20a, 20b)
> • réception d'un message d'authentification de la part de l'étiquette RFID (20a, 20b), lequel contient un texte clair $M$ crypté dans lequel est inclus un élément d'identification (UII) de l'étiquette RFID (20a, 20b) ou d'un objet en étant pourvu ainsi que le chiffre aléatoire RDN1, et
> • décryptage du texte clair $M$ crypté, cependant que l'étape du décryptage comprend la multiplication du texte clair $M$ crypté avec une base de Montgomery $R$ et l'exécution subséquente de l'opération modulo avec le modulo $n$, cependant que le modulo $n = p \cdot q$ consiste en la clé publique de l'appareil de lecture (30a, 30b), que les nombres premiers $p$, $q$ consistent en la clé privée de l'appareil de lecture (30a, 30b), et que la base de Montgomery $R$ consiste en un chiffre entier supérieur au modulo $n$.

3. Procédé selon la revendication 1, **caractérisé en ce que**, dans le texte clair $M$, en outre un deuxième chiffre aléatoire $RDN2$ généré par l'étiquette RFID (20a, 20b) est inclus.

4. Procédé selon selon la revendication 3, cependant que les données incluses dans le texte clair $M$ sont brouillées au moyen d'une opération d'entrelacement afin de répartir aléatoirement sur le texte clair $M$ les données aléatoires provenant de l'appareil de lecture (30a, 30b) et de l'étiquette RFID (20a, 20b).

5. Procédé selon la revendication 3, cependant que l'étiquette RFID (20a, 20b) est configurée de telle façon que le texte chiffré $C^*$ est calculé successivement bit par bit et que les bits déjà calculés du texte chiffré $C^*$ sont envoyés en tant que partie du message d'authentification à l'appareil de lecture (30a, 30b), de telle façon que l'étiquette RFID (20a, 20b) peut, pendant que le défi est encore en train d'être lu sous forme du premier chiffre aléatoire $RDN1$, commencer le décryptage, et que les premiers bits du texte chiffré C* calculé peuvent déjà être délivrés en sortie à l'appareil de lecture (30a, 30b) pendant que les bits suivants du texte chiffré C* sont encore en train d'être calculés.

6. Procédé selon la revendication 1 ou 2, cependant que, par ailleurs, une signature numérique (SIG(UII)) de l'élément d'identification (UII) de l'étiquette RFID (20a, 20b) est incluse dans le texte clair $M$, laquelle est de préférence stockée dans l'unité mémoire (26) de l'étiquette RFID (20a, 20b) et peut être vérifiée par l'appareil de lecture (30a, 30b).

7. Procédé selon la revendication 1 ou 2, cependant que, pour économiser du temps de calcul, le modulo $n$ est choisi comme ceci : n = 1 $(\mathrm{mod}2^{bl \cdot nd})$, cependant que $nd$ est un chiffre entier avec $1 \leq nd < d$, que $bl$ est la largeur de mot de l'unité à processeur (25) de l'étiquette RFID (20a, 20b), et que $d$ est la longueur du modulo $n$ en largeurs de mot de l'unité à processeur (25).

8. Procédé selon la revendication 1 ou 2, cependant que, pour un modulo $n$ donné, la base de Montgomery $R$ est choisie comme ceci : $R = 2^{bl \cdot (d+sd)}$, cependant que $bl$ est la largeur de mot de l'unité à processeur (25) de l'étiquette RFID (20a, 20b), que $d$ est la longueur du modulo $n$ en largeurs de mot de l'unité à processeur (25), et que $sd$ est un paramètre de sécurité qui est choisi de telle manière **qu'on** a $bl \cdot sd \geq 1$, de préférence $bl \cdot sd \geq 10$, et le plus de préférence $\boldsymbol{bl} \cdot sd \geq 100$.

9. Etiquette RFID (20a, 20b) destinée à une communication sécurisée avec un appareil de lecture (30a, 30b), cependant que l'étiquette RFID (20a, 20b) comprend une unité à processeur (25) et une unité mémoire (26) dans laquelle est stocké un élément d'identification (UII), et cependant que l'unité à processeur (25) est conçue pour :

> • recevoir un chiffre aléatoire RDN1 en tant que défi dans le cadre d'un procédé défi/réponse de la part de l'appareil de lecture ;
> • en réaction à la réception du chiffre aléatoire RDN1, crypter un texte clair $M$ dans lequel est inclus l'élément d'identification (UII) de l'étiquette RFID (20a, 20b) ou d'un objet en étant pourvu ainsi que le chiffre aléatoire RDN1, aux fins du calcul d'un texte chiffré $C^*$, ce qui a lieu en ce que le résidu de Montgomery du carré du texte clair $M$ modulo $n$ est calculé par rapport à une base de Montgomery $R$, c'est-à-dire que C* = $M^2 R^{-1} \bmod n$, et
> • envoyer un message d'authentification à l'appareil de lecture (30a, 30b), cependant que le message d'authentification contient le texte chiffré $C^*$ et cependant que le modulo $n = p \cdot q$ consiste en la clé publique de l'appareil de lecture (30a, 30b), que les nombres premiers *p, q* consistent en la clé privée de l'appareil de lecture (30a, 30b), et que la base de Montgomery *R* consiste en un chiffre entier supérieur au modulo *n.*

10. Appareil de lecture (30a, 30b) destiné à la communication sécurisée avec une étiquette RFID (20a, 20b), cependant que l'appareil de lecture (30a, 30b) comprend une unité à processeur conçue pour envoyer un chiffre aléatoire RDN1 en tant que défi dans le cadre d'un procédé défi/réponse à l'étiquette RFID, et pour recevoir un message d'authentification de la part de l'étiquette RFID (20a, 20b), lequel contient un texte clair *M* crypté dans lequel est inclus un élément d'identification (UII) de l'étiquette RFID (20a, 20b) ou d'un objet en étant pourvu ainsi que le chiffre aléatoire RDN1 généré par l'appareil de lecture, et pour décrypter le texte clair *M* crypté, cependant que, lors du décryptage, le texte clair *M* crypté est multiplié avec une base de Montgomery *R* et que, ensuite, l'opération modulo est exécutée avec le modulo *n,* cependant que le modulo $n = p \cdot q$ consiste en la clé publique de l'appareil de lecture (30a, 30b), que les nombres premiers *p, q* consistent en la clé privée de l'appareil de lecture (30a, 30b), et que la base de Montgomery *R* consiste en un chiffre entier supérieur au modulo *n.*

11. Système (10) destiné à la communication sécurisée avec au moins une étiquette RFID (20a, 20b) selon la revendication 9 et avec au moins un appareil de lecture (30a, 30b) selon la revendication 10.

10

## Fig. 1

26

22

20a

UII, n,
SIG(UII), ...

25

RND

24

28

## Fig. 2

**Lesegerät**        **Tag**

S1

Erzeuge Zufallszahl
RND1

Challenge: RND1

S2

S3

Erzeuge Zufallszahl
RND2

S4

Erzeuge Klartext M
M = MIX (UII; SIG(UII); RND1; RND2)

S5

Berechne Ciphertext C*

$$C^* = M^2 R^{-1} \bmod n$$

Response: C*

S7

S6

Berechne Ciphertext C

$$C = C^* R \bmod n$$

S8

Berechne Klartext M

$$M = \sqrt{C} \bmod n$$

S9

Extrahiere UII, SIG(UII)
und RND1 aus Klartext M

S10

Identifiziere/Authentifiziere Tag
Überprüfe SIG(UII)

# Fig. 3

```
Algorithmus MontgomerySquare:
    acc = 0
    i = 0
    while (i < 2 * d + sd):
        // Quadrieren von m
        j = max(0, i + 1 - d);  k = i - j
        acc1 = 0
        while k > j:
            acc1 = acc1 + m_j * m_k
            j = j + 1 ;  k = k - 1
        acc = acc + 2 * acc1
        if j == k:
            acc = acc + m_j * m_j
        // Montgomery Reduktion
        if i < d + sd:
            k = min(i, d - 1);  j = i - k
            while k > 0:
                acc =  acc + a_j * n_k
                j = j + 1;  k = k - 1
            a_i = (acc * n_inv) mod 2^bl
            acc = acc + a_i * n_j
        else:
            k = max(0, i - d - sd + 1);  j = i - k
            while k < d:
                acc = acc +  a_j * n_k
                j = j - 1;  k = k + 1
            c_{i-d-sd} = acc mod 2^bl
        acc = acc / 2^bl
        i = i + 1
    stop
```

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19820605

**In der Beschreibung aufgeführte Nicht-Patentliteratur**

- A Low-Resource Public-Key Identification Scheme for RFID Tags and Sensor Nodes. **Y. OREN ; M. FELDHOFER.** WISEC. ACM, 2009, 59-68
- Memory Efficient Variants of Public-Key Schemes for Smart Card Applications. **A. SHAMIR.** Advances in Cryptology - EUROCRYPT '94. Springer LNCS, vol. 950, 445-449

- **A. J. MENEZES ; P.C. VAN OORSCHOT ; S.C. VANSTONE.** Handbook of Applied Cryptography